# EUROPÄISCHE PATENTSCHRIFT

(11) **EP 0 750 837 B1**
(45) Veröffentlichungstag und Bekanntmachung des Hinweises auf die Patenterteilung: **01.03.2000**
(21) Anmeldenummer: 96107048.9
(22) Anmeldetag: 04.05.1996
(51) Int. Cl.: A01G 3/053

(54) **Heckenschere**
Hedge trimmer
Taille-haie

(30) Priorität: 28.06.1995 DE 19522968
(43) Veröffentlichungstag der Anmeldung: 02.01.1997
(73) Patentinhaber: ROBERT BOSCH GMBH, 70442 Stuttgart (DE)
(72) Erfinder: Heywood, Peter, Dipl.-Ing., 70794 Filderstadt (DE); Achtzehnter, Helmut, 70597 Stuttgart (DE)

(56) Entgegenhaltungen:
- EP-A- 0 214 455
- EP-A- 0 422 773
- DE-A- 3 816 363
- DE-A- 4 101 705
- DE-U- 9 410 079
- US-A- 3 847 233

## Beschreibung

### Stand der Technik

Die Erfindung geht aus von einer Heckenschere nach der Gattung des Anspruchs 1.

Durch EP-PS 0 214 455 ist eine Heckenschere mit einer sogenannten Totmannschaltung bekannt, die eine Zweihandbedienung erfordert. Dabei muß der Bedienende zum Betrieb der Heckenschere zwei Hebel unabhängig voneinander gedrückt halten. Wird auch nur einer der Hebel losgelassen, betätigt er beim Zurückgehen in seine Ausgangsposition jeweils einen elektrischen Mikroschalter und unterbricht dadurch einen Stromkreis der Heckenschere, so daß deren Antrieb gestoppt wird.

Als Betätigungsmittel für den elektrischen Schalter dient dabei ein Seilzug. Der Seilzug ist ohne Hülse, offen über Umlenkrollen und Gleitstücke geführt und ist empfindlich gegen Staub und Schmutz. Außerdem ist der Montageaufwand beim Einbau dieses Seilzugs sehr hoch, der bei Gebrauch der Hekkenschere in bestimmten Zeitabständen nachgespannt bzw. justiert werden muß. Falls der Seilzug nicht entsprechend gepflegt wird, kann es zum Klemmen der Schalterbetätigung kommen, so daß die Sicherheitsabschaltung nicht gewährleistet ist.

Es sind auch Heckenscheren mit Totmannschaltung mit nur einem einzigen Mikroschalter bekannt, der gemeinsam von beiden Hebeln bedient wird. Dabei sind die Hebelenden über ein Koppelglied gelenkig miteinander verbunden. Die Koppel trägt mittig eine Schaltstange, die den Mikroschalter betätigt. Die Koppel wird beim Betätigen der Hebel wippenartig bewegt, wobei hohe Bedienkräfte erforderlich sind, die einen hohen Verschleiß zwischen der Koppel und den Hebeln bewirken.

### Vorteile der Erfindung

Die erfindungsgemäße Heckenschere mit den kennzeichnenden Merkmalen des Anspruchs 1 hat demgegenüber den Vorteil eines einfachen, robusten Aufbaus unter Verwendung einer geringen Zahl leicht herstellbarer Teile und einer einfachen Montierbarkeit, beispielsweise nur eines einzigen Mikroschalters, der zum Ein- und Ausschalten und als Totmannschalter dient. Die Teile haben ein nur geringes Gewicht.

Die Bedienkräfte zum Einschalten der Heckenschere sind gering, dadurch ist der Bedienkomfort hoch und die Totmannschaltung ist verschleißunempfindlich. Späterer Justieraufwand für die Totmannschaltung entfällt. Außerdem sind die Betätigungsmittel für den Sicherheitsschalter der Heckenschere unempfindlich gegen Verschleiß und gegen Schmutz.

Weitere, vorteilhafte Ausgestaltungen der Erfindung ergeben sich aus den abhängigen Ansprüchen.

### Zeichnung

Ausführungsbeispiele der Erfindung sind in der nachfolgenden Beschreibung anhand der zugehörigen Zeichnung näher erläutert.

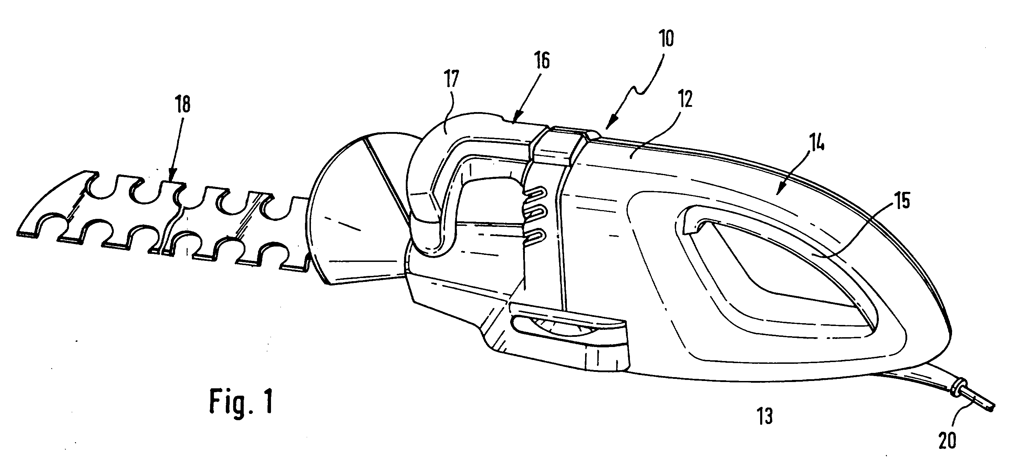

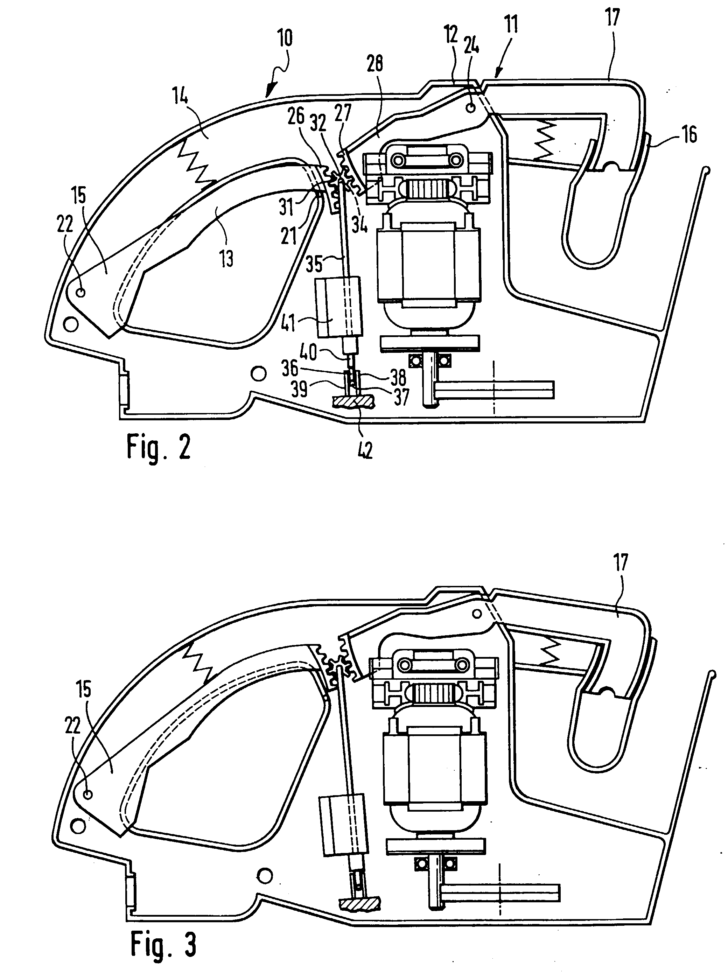

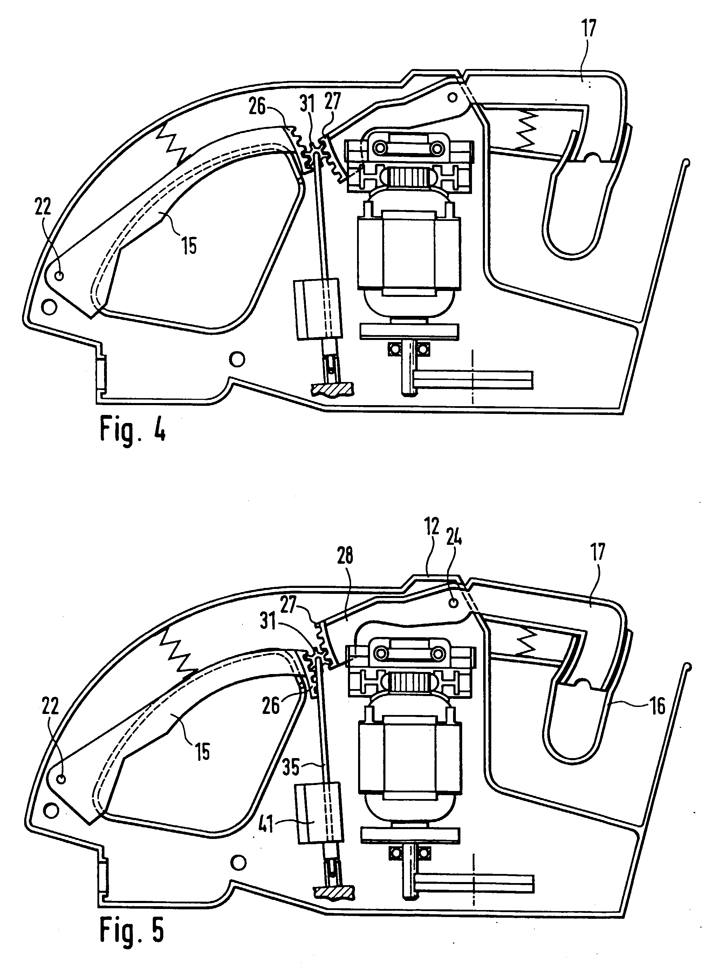

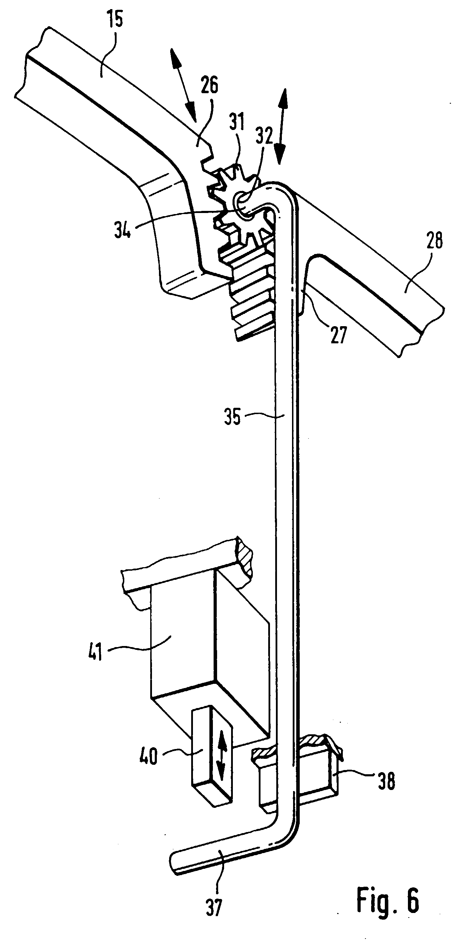

Es zeigen Figur 1 eine Seitenansicht der erfindungsgemäßen Heckenschere, Figur 2 eine seitliche Schnittdarstellung des Griffbereichs der Heckenschere bei nicht betätigtem elektrischem Schalter, Figur 3 Zeichnung gemäß Figur 2 bei eingeschaltetem elektrischen Schalter, die Figur 4 die Schnittdarstellung bei nur einem betätigten Schalthebel, Figur 5 die Schnittdarstellung gemäß Figur 1 bei Betätigung nur des anderen Schalthebels und Figur 6 eine raumbildliche Darstellung des Schaltmechanismus zwischen den Schalthebeln.

### Beschreibung der Ausführungsbeispiele

Die in Figur 1 dargestellte Heckenschere 10 besteht aus einem Gehäuse 12 mit einem hinteren Handgriff 14 und einem vorderen Handgriff 16. Aus dem Gehäuse 12 tritt stirnseitig nach vorn ein schematisch dargestelltes Heckenscherenmesser 18 aus. Im hinteren Handgriff 14 ist ein erster Schalthebel 15 einschiebbar geführt. Der vordere Handgriff 16 trägt einen zweiten, von oben betätigbaren Schalthebel 17. Hinten aus dem Gehäuse 12 tritt ein Netzanschlußkabel 20 aus.

Die Heckenschere 10 ist nur ingangsetzbar, wenn gleichzeitig beide Schalthebel 15, 17 gegenüber dem zugehörigen Handgriff 14, 16 niedergedrückt sind.

In Figur 2 zeigt die seitliche Schnittdarstellung der Hekkenschere 10 das Gehäuse 12 mit dem hinteren Handgriff 14, dem ersten Schalthebel 15 und dem vorderen Handgriff 16 mit dem zweiten Schalthebel 17.

Der erste Schalthebel 15 ist ein einarmiger Hebel, der um eine am Handgriff 14 angelenkte Achse 22 zum Handgriff 14 hin gegen die Kraft einer nicht näher bezeichneten Feder mit einem bestimmten Hub verschwenkbar ist. In seiner Ruheposition stützt er sich an einem Anschlag 21 ab und taucht bei Betätigung in den Handgriff 14 ein. Der Schalthebel 15 trägt auf seinem der Achse 22 abgewandten freien Ende ein zahnstangenartiges Zahnsegment 26.

Über dem vorderen Handgriff 16 erstreckt sich der erste Schalthebel 17 um eine Achse 24 wippenartig mit einem bestimmten Hub schwenkbar. Er ist mit einem zweiten Hebelarm 28 verbunden. Der zweite Hebelarm 28 trägt an seinem freien Ende ein zahnstangenartiges Zahnsegment 27, das im wesentlichen mit dem Zahnsegment 26 übereinstimmt. Die Zahnsegmente 26, 27 sind um die Achsen 22, 24 gekrümmt. Zwischen den Zahnsegmenten 26, 27 stützt sich ein Zahnrad 31 ab, das eine zentrale Bohrung 32 trägt. Durch die zentrale Bohrung 32 greift drehbar eine Achse 34, die sich rechtwinklig abgebogen als Schaltstange 35 fortsetzt. Die Schaltstange 35 ist in der Ebene der Achse 34 rechtwinklig an ihrem unteren Ende 36 zu einem Hakenschenkel 37 abgebogen. Das untere Ende 36 ist zwischen zwei seitlichen Führungsrippen 38, 39 des Gehäuses 12 längsverschiebbar geführt.Eine untere Anschlagrippe 42 begrenzt den Weg der Schaltstange 35 nach unten.

Der Hakenschenkel 37 ist mit einem bestimmten Abstand fluchtend zu einem Taster 40 eines Elektroschalters 41 angeordnet. Der Abstand zwischen dem Taster 40 und der Unterkante des Hakenschenkels 37 ist größer als der halbe Hub eines der Schalthebel 15, 17 aber kleiner als deren voller Hub.

Das Zahnrad 31 wird unverlierbar zwischen den beiden Zahnsegmenten 26, 27 festgehalten. Wird z.B. der erste Schalthebel 15 betätigt, wird das Zahnsegment 26 in Betrachtungsrichtung nach oben verschwenkt. Auf seinem Verschwenkweg nimmt das Zahnsegment 26 das Zahnrad 31 mit (siehe Figur 4), wobei sich das Zahnrad 31 sowohl auf dem Zahnsegment 27 des zweiten Schalthebels 17 als auch am Zahnsegment 26 abwälzt. Dabei legt es einen Weg zurück, der halb so lang ist wie die

Hälfte des Hubes des verschiebenden Zahnsegmentes. Damit wird der Taster 40 des Mikroschalters 41 noch nicht betätigt.

Wird bei nicht betätigtem ersten Schalthebel 15 der zweite Schalthebel 17 betätigt, wird das Zahnrad 31 um den halben Hub mit nach oben mitgenommen, wobei es sich, angetrieben vom Zahnsegment 27 (Figur 5), auf dem Zahnsegment 26 abwälzt. Dabei wird der Taster 40 des Mikroschalters 41 noch nicht betätigt.

Der Taster 40 des Mikroschalters 41 wird erst dann betätigt, wenn beide Schalthebel 15, 17 um deutlich mehr als ihren halben Hub betätigt sind. In diesem Fall trifft der Hakenschenkel 37 auf den Taster 40. Bei Betätigung beider Schalthebel 15, 17 wird die Schaltstange 35 mit dem Hakenschenkel 37 über ihren Abstand zum Taster 40 hinaus nach oben verschoben bis zum Betätigen des Elektroschalters 41 (siehe Figur 3).

Die Figur 3 zeigt die Schnittdarstellung gemäß Figur 2 bei eingeschaltetem Mikroschalter40. Beide Schalthebel 15, 17 sind um ihren maximalen Betätigungshub verschoben.

Figur 4 zeigt die Darstellung gemäß Figur 2 nur bei betätigtem ersten Schalthebel 15. Hier kann der Hakenschenkel 37 den Taster 40 noch nicht erreichen.

Gemäß Figur 5 ist nur der zweite Schalthebel 17 ausgelenkt, so daß wie in Figur 4 der Hakenschenkel 37 den Taster 40 ebenfalls nicht erreicht. Nur wenn beide Schalthebel 15, 17 gemeinsam eine annähernd maximale, jedenfalls mehr als jeweils 50% Auslenkung gemäß Figur 3 erreicht haben, ist der Mikroschalter 41 eingeschaltet, so daß der Elektromotor arbeitet und die Heckenschere betriebsbereit ist. Wird einer der Schalthebel 15, 17 losgelassen, schaltet der Mikroschalter 41 die Verbindung des Antriebsmotors der Heckenschere 10 zur Energieversorgung aus. Die Heckenschere 10 ist nicht betriebsbereit.

Die Anordnung des Zahnrads 31 zwischen zwei abwälzenden Teilen 26, 27 entspricht einem Wälzgetriebe in der Art eines Kugellagers. Beim Kugellager legen die Kugeln den halben Weg des drehbaren Lagerrings zurück.

In Figur 6 ist eine vergrößerte raumbildliche Darstellung der Zahnsegmente 26, 27 mit dem Zahnrad 31 und der Schaltstange 35, sowie dem Mikroschalter 41 gezeigt. Dabei ist deutlich zu erkennen, daß die Schaltstange 35 im oberen Bereich rechtwinklig zur Achse 34 abgebogen ist, wobei das abgebogene, untere Stück den unteren Hakenschenkel 37 bildet. Der Hakenschenkel 37 ist seitlich an einer Führungsrippe 38 geführt, die zu einem Rippenpaar gehört, wobei die zur Führungsrippe 38 benachbarte gegenüberliegende Rippe 39 nicht mit dargestellt ist. Besonders deutlich wird auch die Anordnung des Hakenschenkels 37 gegenüber dem Taster 40 des Mikroschalters 41, d.h. der deutliche Abstand in nichtbetätigter Stellung.

Bei einem nichtdargestellten Ausführungsbeispiel der Erfindung sind die Schalthebel nicht fluchtend, sondern zueinander seitlich und längs versetzt angeordnet, wobei die Enden der Schalthebel einander mit Seitenflächen gegenüberstehen. An diesen Seitenflächen stützt sich das Wälzrad ab, so daß dessen Drehachse parallel zu den Längsachsen der Schalthebel verläuft. Damit ist ein mit groben Toleranzen funktionierendes, einfach herstellbares Wälzgetriebe geschaffen.

## Patentansprüche

1. Heckenschere (10) mit einen Gehäuse (12) mit zwei Handgriffen (14, 16) mit je einem Schalthebel (15, 17) zur Zweihandbedienung eines Schalters (41) zum Ein-/Aus-Schalten des Antriebs der Heckenschere (10), wobei je ein freies Ende (26, 27) der Schalthebel (15, 17) zur Betätigung des Schalters (41) dient und wobei die Schalthebel (15, 17) zum Betrieb der Heckenschere (10) unabhängig voneinander gleichzeitig betätigt sein müssen, dadurch gekennzeichnet, daß sich an den freien Enden (26, 27) der Schalthebel (15, 17) ein Wälzrad (31) abwälzbar abstützt, so daß die freien Enden (26, 27) der Schalthebel (15, 17) gemeinsam mit dem Wälzrad (31) ein Wälzgetriebe bilden und daß das Wälzrad (31) zur Betätigung des Schalters (41) dient

2. Heckenschere nach Anspruch 1, dadurch gekennzeichnet, daß die freien Enden (26, 27) der Schalthebel (15, 17) zueinander beabstandet und im wesentlichen fluchtend angeordnet sind, so daß sich an ihnen, insbesondere zwischen ihnen, ein Wälzrad (31) abwälzen kann, und wobei das Wälzrad (31) eine frei drehbare Achse (34) trägt, die, insbesondere über ein Zugmittel (35), mit einem Taster (40) des Schalters (41) koppelbar ist.

3. Heckenschere nach Anspruch 2, dadurch gekennzeichnet, daß das Wälzrad (31) als Zahnrad und daß die freien Enden (26, 27) der Schalthebel (15, 17) als Zahnsegment, insbesondere als Zahnstange, ausgestaltet sind.

4. Heckenschere nach Anspruch 3, dadurch gekennzeichnet, daß die Zahnsegmente (26, 27), inbesondere kreisbogenartig um die Achsen (22, 24) der Schalthebel 15, 17), gekrümmt sind.

5. Heckenschere nach Anspruch 3 oder 4, dadurch gekennzeichnet, daß die Zahnsegmente (26, 27) aus flexiblem Material bestehen.

6. Heckenschere nach einem der vorhergehenden Ansprüche 2 bis 5, dadurch gekennzeichnet, daß die Achse (34) über ein Zugmittel (35) mit dem Taster (40) gekoppelt ist, wobei das Zugmittel (35) als Schaltstange ausgestaltet ist, die am unteren freien Ende (36) zu einem Hakenschenkel (37) umgebogen ist.

7. Heckenschere nach Anspruch 6, dadurch gekennzeichnet, daß der Hakenschenkel (37) in Ruhestellung in einem Abstand, fluchtend zum Taster (40) des Schalters (41) angeordnet ist.

8. Heckenschere nach Anspruch 7, dadurch gekennzeichnet, daß der Abstand zwischen dem Hakenschenkel (37) und dem Taster (40) in unbetätigter Stellung der Schaltstange (35) kleiner als ein ganzer Hub der Zahnsegmente (26, 27) und größer oder gleich dessen Hälfte bei betätigten Schalthebeln (15, 17) ist.

9. Heckenschere nach einem der vorhergehenden Ansprüche 6 bis 8, dadurch gekennzeichnet, daß das freie Ende (36) der Schaltstange (35) zwischen Rippen (38, 39) des Gehäuses (12) längsverschiebbar geführt und in seinem Verschiebe-Weg nach unten in Richtung der Aus-Stellung des Schalters (41) durch einen Anschlag (42) begrenzt ist.

10. Heckenschere nach einem der vorhergehenden Ansprüche, dadurch gekennzeichnet, daß die Schalthebel zueinander seitlich und längs versetzt angeordnet sind, wobei ihre Enden einander mit Seitenflächen gegenüberstehen, an denen sich das Wälzrad abstützt, so daß dessen Drehachse parallel zu den Längsachsen der Schalthebel verläuft.

## Claims

1. Hedge trimmer (10) having a housing (12) with two hand grips (14, 16), each having a switching lever (15, 17) for the two-handed operation of a switch (41) for switching on/off the drive of the hedge trimmer (10), a respective free end (26, 27) of the switching levers (15, 17) serving for actuating the switch (41) and the switching levers (15, 17) having to be actuated simultaneously, independently of each other, for the operation of the hedge trimmer (10), characterized in that a rolling-contact gear (31) is supported in such a way that it can roll on the free ends (26, 27) of the switching levers (15, 17), so that the free ends (26, 27) of the switching levers (15, 17) together with the rolling-contact gear (31) form a rolling-contact gear mechanism, and in that the rolling-contact gear (31) serves for the actuation of the switch (41).

2. Hedge trimmer according to Claim 1, characterized in that the free ends (26, 27) of the switching levers (15, 17) are arranged spaced apart from each other and essentially in line, so that a rolling-contact gear (31) can roll on them, in particular between them, and the rolling-contact gear (31) bearing a freely rotatable spindle (34), which can be coupled to a feeler (40) of the switch (41), in particular by a drawing means (35).

3. Hedge trimmer according to Claim 2, characterized in that the rolling-contact gear (31) is designed as a toothed wheel and in that the free ends (26, 27) of the switching levers (15, 17) are designed as a toothed segment, in particular as a toothed rack.

4. Hedge trimmer according to Claim 3, characterized in that the toothed segments (26, 27) are curved, in particular in the manner of arcs of a circle, around the spindles (22, 24) of the switching levers (15, 17).

5. Hedge trimmer according to Claim 3 or 4, characterized in that the toothed segments (26, 27) consist of flexible material.

6. Hedge trimmer according to one of the preceding Claims 2 to 5, characterized in that the spindle (34) is coupled to the feeler (40) by a drawing means (35), the drawing means (35) being designed as a shifting rod which is bent around at the lower free end (36) to form a hook leg (37).

7. Hedge trimmer according to Claim 1, characterized in that, in the position of rest, the hook leg (37) is arranged at a distance from and in line with the feeler (40) of the switch (41).

8. Hedge trimmer according to Claim 7, characterized in that the distance between the hook leg (37) and the feeler (40) in the unactuated position of the shifting rod (35) is less than a full displacement of the toothed segments (26, 27) and greater than or equal to half that with the switching levers (15, 17) actuated.

9. Hedge trimmer according to one of the preceding Claims 6 to 8, characterized in that the free end (36) of the shifting rod (35) is guided in a longitudinally displaceable manner between ribs (38, 39) of the housing (12) and is limited in its displacing travel downwards in the direction of the off position of the switch (41) by a stop (42).

10. Hedge trimmer according to one of the preceding claims, characterized in that the switching levers are arranged laterally and longitudinally offset with respect to each other, their ends being situated with side faces opposite each other, on which the rolling-contact gear is supported, so that its axis of rotation runs parallel to the longitudinal axes of the switching levers.

## Revendications

1. Taille-haie (10) comprenant un carter (12) avec deux poignées (14, 16) avec chacune un levier de commande (15, 17) pour mettre en route ou arrêter l'entraînement du taille-haie (10), chaque extrémité libre (26, 27) des leviers de commande (15, 17) servant à actionner l'interrupteur (41) et les leviers de commande (15, 17) devant être actionnés en même temps indépendamment l'un de l'autre pour faire fonctionner le taille-haie (10),
caractérisé en ce que
sur les extrémités libres (26, 27) des leviers de commande (15, 17) prend appui une roue de roulement (31), qui peut rouler de telle sorte que les extrémités libres (26, 27) des leviers de commande (15, 17) forment en même temps que la roue de roulement (31) une transmission par roulement et que la roue de roulement (31) serve à actionner l'interrupteur (41).

2. Taille-haie selon la revendication 1,
caractérisé en ce que
les extrémités libres (26, 27) des leviers de commande (15, 17) se trouvent à une certaine distance l'une de l'autre et sont disposées sensiblement en alignement, de telle sort qu'une roue de roulement (31) puisse rouler sur elles, en particulier entre elles, et la roue de roulement (31) portant un axe libre (34), qui peut tourner et que l'on peut coupler, en particulier au moyen d'un organe de traction (35) avec un poussoir (40) de l'interrupteur (41).

3. Taille-haie selon la revendication 2,
caractérisé en ce que
- la roue de roulement (31) est constituée sous la forme d'une roue dentée et
- les extrémités libres (26, 27) des leviers de commande (15, 17) sont constituées sous la forme de segments pourvus de dents, en particulier sous la forme de crémaillères.

4. Taille-haie selon la revendication 3,
caractérisé en ce que
les segments pourvus de dents (26, 27), sont recourbés, en particulier en forme d'arcs de cercle autour des axes (22, 24) des leviers de commande (15, 17).

5. Taille-haie selon la revendication 3 ou 4,
caractérisé en ce que
les segments pourvus de dents (26, 27) sont réalisés en une matière flexible.

6. Taille-haie selon l'une des revendications précédentes 2 à 5,
caractérisé en ce que
l'axe (34) est accouplé au moyen d'un organe de traction (35) avec le poussoir (40), l'organe de traction (35) étant constitué sous la forme d'une tige de commande, qui est coudée à son extrémité libre (36) en un bras (37) en forme de crochet.

7. Taille-haie selon la revendication 1,
caractérisé en ce que
le bras (37) en forme de crochet, quand il est en position de repos, est à une certaine distance en alignement avec le poussoir (40) de l'interrupteur (41).

8. Taille-haie selon la revendication 7,
caractérisé en ce que
la distance entre le bras (37) en forme de crochet et le poussoir (40) quand la tige de commande (35) est en position non actionnée est inférieure à une course tout entière des segments pourvus de dents (26, 27) et est supérieure ou égale à sa moitié quand les leviers de commande (15, 17) sont actionnés.

9. Taille-haie selon la revendication 6 à 8,
caractérisé en ce que
- l'on fait passer l'extrémité libre (36) de la tige de commande (35) entre des nervures (38, 39) du carter (12) de façon qu'elle puisse coulisser dans le sens de la longueur et
- son trajet de translation vers le bas est limité en direction de la position arrêt de l'interrupteur (41) par une butée (42).

10. Taille-haie selon l'une des revendications précédentes,
caractérisé en ce que
les leviers de commande sont disposés de façon décalée les uns par rapport aux autres latéralement et dans le sens de la longueur, leurs extrémités se trouvant en regard l'une de l'autre par leurs faces latérales sur lesquelles prend appui la roue de roulement, de telle sorte que son axe de rotation s'étende parallèlement aux axes longitudinaux des leviers de commande.
